# EUROPEAN PATENT SPECIFICATION

(11) **EP 4 185 717 B1**
(45) Date of publication and mention of the grant of the patent: **24.07.2024**
(21) Application number: 21763119.1
(22) Date of filing: 28.07.2021
(51) Int. Cl.: C14B 17/14, F16H 7/24

(54) **SEMI-AUTOMATIC TOOL FOR CHANGING CONVEYOR BELTS IN A MACHINE FOR TREATING SHEET PRODUCTS, AND METHOD OF USE**
HALBAUTOMATISCHES WERKZEUG ZUM WECHSELN VON FÖRDERBÄNDERN IN EINER MASCHINE ZUR BEHANDLUNG VON BLATTFÖRMIGEN PRODUKTEN UND VERWENDUNGSVERFAHREN
OUTIL SEMI-AUTOMATIQUE POUR CHANGER DES BANDES TRANSPORTEUSES DANS UNE MACHINE POUR TRAITER DES PRODUITS EN FEUILLE ET PROCÉDÉ D'UTILISATION

(30) Priority: 31.07.2020 IT 202000018832
(43) Date of publication of application: 31.05.2023
(73) Proprietor: Officine di Cartigliano SpA, 36050 Cartigliano (VI) (IT)
(72) Inventor: POLATO, Antonio, 36063 Marostica (VI) (IT)
(74) Representative: Maroscia, Antonio
(86) International application number: PCT/IB2021/056852
(87) International publication number: WO 2022/023992

(56) References cited:
- CN-U- 207 495 632
- CN-U- 209 064 866

## Description

### Technical field

The present invention generally finds application in the field of tanning equipment and particularly relates to a tool for changing conveyor belts.

The invention further relates to a staking machine having the aforementioned tool and to a method of installing and replacing the conveyor belts of a staking machine.

### Background art

Machines for processing flexible sheet products, such as industrial hides, having closed-loop conveyor belts supported by at least one pair of end rollers, have long been known to be used in the tanning industry.

One example of these machines are staking machines for softening and stretching flexible sheet products such as industrial hides having opposite sides, i.e. a grain side and a flesh side.

These machines are used in the steps after tanning and/or drying to restore the natural softness of leather, as well as increase its size, i.e. the useful leather area.

Generally, these machines comprise motorized feeding means, for holding the products and feeding them in a longitudinal direction, which consist, for instance, of a pair of mutually facing conveyor belts, with the sheet products to be staked interposed therebetween.

These machines further comprise one or more pairs of mutually facing beating plates parallel to the longitudinal direction. The plates are reciprocated to move toward and away from each other substantially perpendicular to the product feeding plane.

Generally, conveyor belts in this type of machines are consumables because the reciprocating motion of the beating plates tends to rapidly consume the belts, by defibering and breaking them, resulting in the need to change them frequently.

Conveyor belt replacement and installation are neither easy nor quick due to the considerable elastic forces involved and require the use of suitable pulling means, typically lift trucks, in combination with additional tools for inserting the belts relative to the end rollers.

In addition, belt replacement and installation require skilled and qualified personnel, as well as relatively long replacement and downtime times.

In order to at least partially obviate these drawbacks, attempts have been made to provide devices for simplifying replacement of conveyor belts in a machine for use in the tanning industry.

One example of such known solutions is the use of a tool having a hook shape for hooking in one end of a conveyor belt to be inserted at one end of the machine after fitting the other end of the belt on the rollers at the other end of the machine.

This is a quite basic and simple tool, comprising a kind of big carabiner attached to the end of a cable and inserted into a hole on the tool, with the cable being pulled by a winch or a motorized drum until the belt extends toward the opposite side of the machine.

Once the belt covers the extent of the machine, it is manually slid along the end rollers of the machine.

A first drawback of this known solution is that the conveyor belt replacement takes a long time, resulting in increased machine and personnel downtime.

Another drawback of this solution is the risk of sudden release of the belt under tension, resulting in a serious hazard for the personnel.

A further drawback consists in the large number of removable devices that are used only for replacement and installation of the new conveyor belt.

Moreover, these operations must be always carried out by skilled and qualified operators, which increases machine management costs and requires a considerable amount of energy and labor force.

In an attempt to at least partially obviate these drawbacks, an automatic device has been developed for changing the belts of a conveyor, such as the one as disclosed in CN209064866U, which provides a telescopic device with a roller adapted to engage and extend the belt.

Nevertheless, this known device is mounted to the machine in which the belt is to be replaced but is not configured to be removably coupled to and uncoupled from the machine. In addition, when in use it does not reduce the time required to replace the conveyor belt and the machine downtime.

### Technical Problem

In light of the prior art, the technical problem addressed by the present invention is to simplify the operations required to change a conveyor belt with utmost safety and in a relatively short time.

### Disclosure of the invention

The object of the present invention is to obviate the above discussed drawback, by providing a tool and a method for changing conveyor belts in a machine for processing flexible sheet products, that is highly efficient and relatively cost-effective.

A particular object of the present invention is to provide a tool and a method as described hereinbefore that are simpler than those of the prior art.

A further object of the present invention is to provide a tool and a method as described hereinbefore, that can avoid the use of lift trucks and other external pulling machines.

An additional object of the present invention is to provide a tool and a method as described hereinbefore that can considerably reduce the time required to change the conveyor belts, thereby reducing machine downtime.

A further object of the present invention is to provide a tool and a method as described hereinbefore, that can increase the safety of the operators in charge of replacing the conveyor belts.

Yet another object of the present invention is to provide a tool and a method as described hereinbefore, that require neither a particular skill of the operators in charge of the installation of the conveyor belts nor excessive manual efforts.

These and other objects, as more clearly shown hereinafter, are fulfilled by a semiautomatic belt-changing tool adapted to be coupled to a machine for processing flexible sheet products, such as industrial hides, according to claim 1, wherein the machine comprises a frame defining an inlet area and an outlet area for the products, and having at least one pair of closed-loop conveyor belts installed thereon, which face each other and are supported by pairs of end rollers.

According to a peculiar aspect of the invention, the tool comprises a first extending device with a head slidingly mounted on longitudinal guide means designed to be secured to the frame of the machine; at least one transverse grip member being associable with the head, for engaging a first portion of a belt, whose second portion, opposite to the first portion, is already wound on the other end roller.

Advantageously, drive means are provided, which act upon the head to longitudinally move it along the guide means to stretch the belt and allow the first portion of the belt to fit over the adjacent end roller by a transverse sliding motion with little manual effort.

Conveniently, the first extending device is configured to engage and stretch at least one upper belt of the machine. Thus, the stretching head comprises a support secured to the carriage and having seats for removable insertion of a plurality of sleeves defining the transverse grip members.

The tool further comprises a second extending device similar to the first extending device and configured to engage and stretch at least one lower belt of the machine.

The second extending device differs from the first extending device in the shape of the support for the gripping sleeves.

With this combination of features, the tool affords effective and immediate replacement of the belt to reduce the downtime.

Advantageous embodiments of the tool are obtained according to the dependent claims.

The invention further relates to a method of using the above discussed tool according to claim 11.

### Brief description of the drawings

Further features and advantages of the invention will be more apparent from the detailed description of a preferred, non-exclusive embodiment of a tool and a method for changing at least one conveyor belt of a machine for processing flexible sheet products, which is described as a nonlimiting example with the help of the annexed drawings, in which:

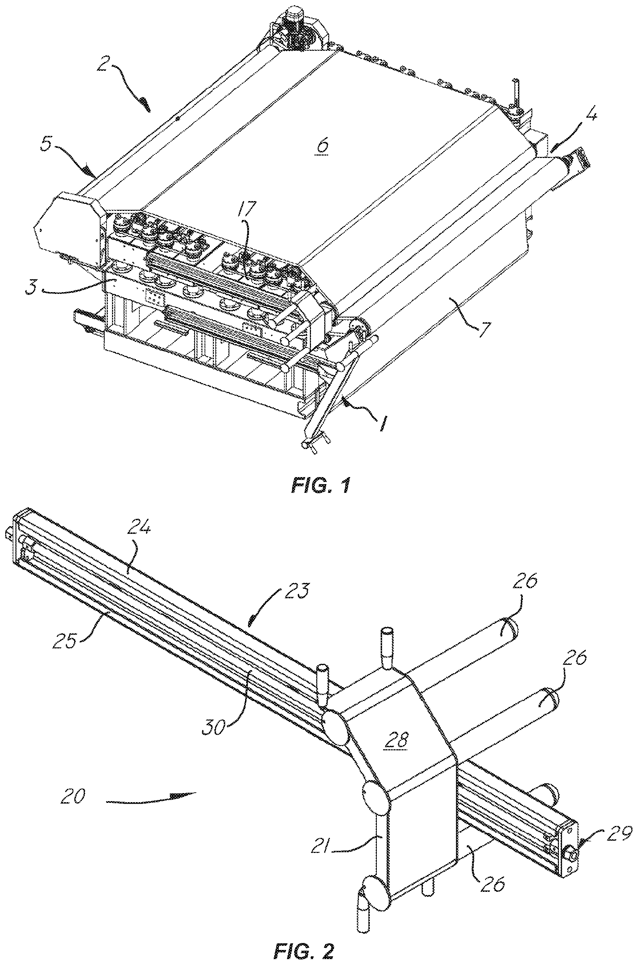

FIG. 1 is a perspective view of a staking machine for softening and stretching industrial hides, having a pair of conveyor belts supported by end rollers;
FIG. 2 is a perspective view of a first extending device that is part of the tool of the invention;

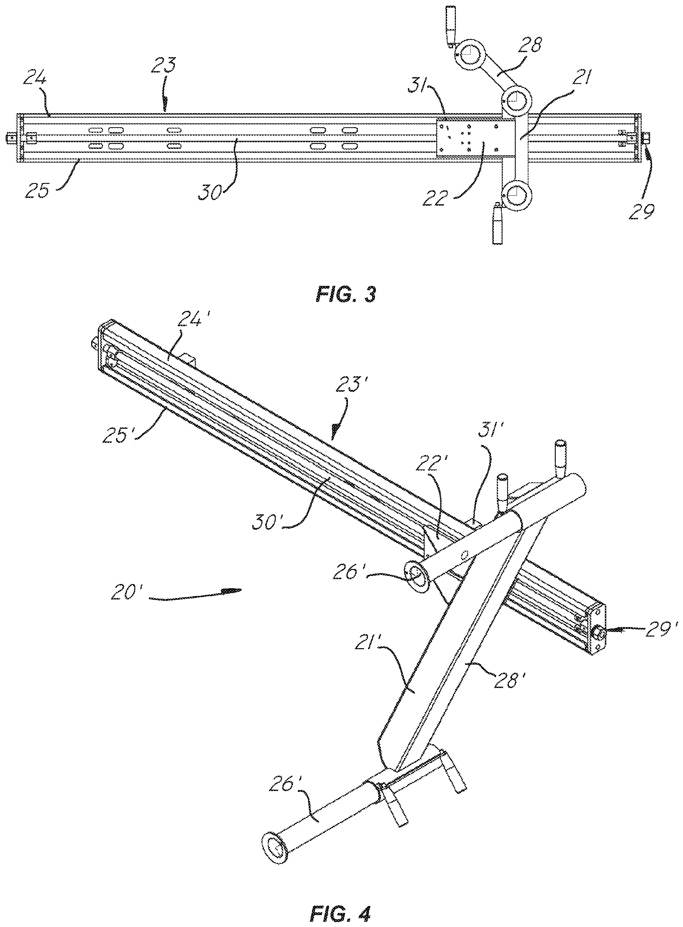

FIG. 3 is a lateral view of the extending device of FIG. 2;
FIG. 4 is a perspective view of a second extending device that is part of the tool of the invention;

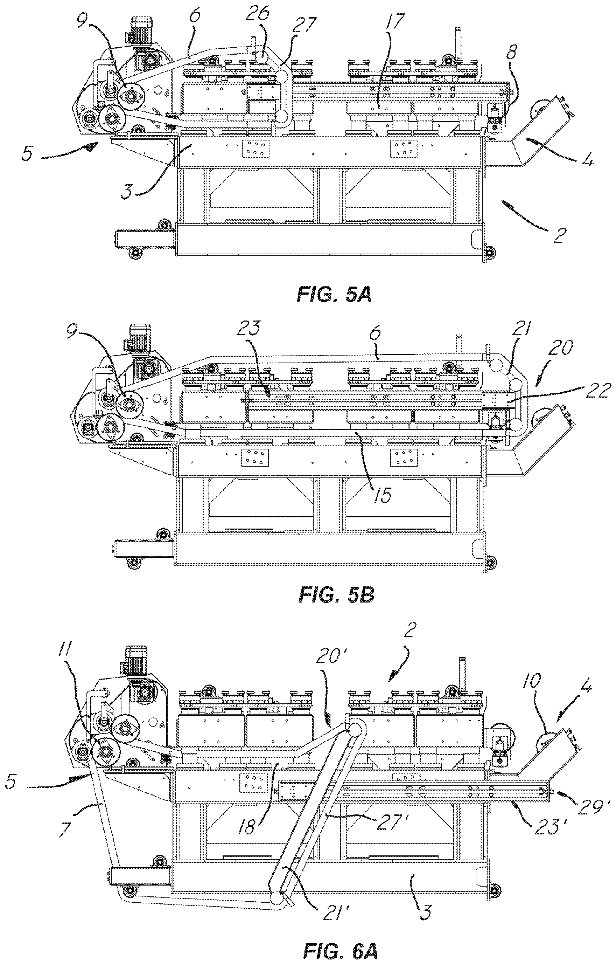

FIG. 5A is a lateral view of the first extending device in a first operating step;
FIG. 5B is a lateral view of the first extending device in a second operating step;
FIG. 6A is a lateral view of the second extending device in a first operating step;

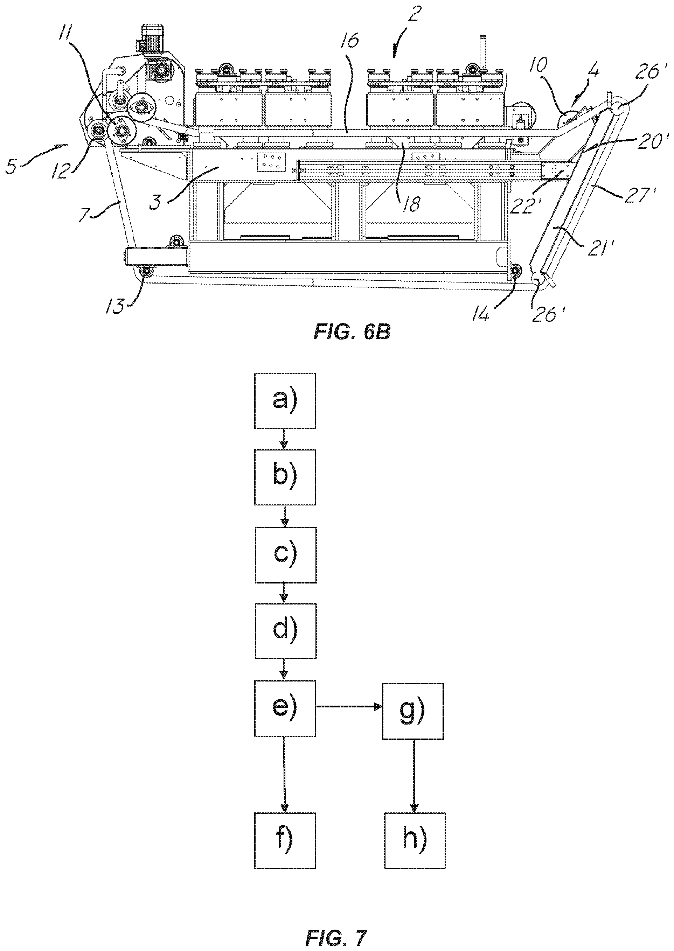

FIG. 6B is a lateral view of second extending device in a second operating step;
FIG. 7 is a block diagram of the method of using the tool of the invention.

### Detailed description of a preferred exemplary embodiment

Particularly referring to the figures, there is shown a belt-changing tool, generally designated by numeral 1, designed to be coupled to a machine 2 for processing flexible sheet products, such as industrial hides and the like.

As used hereinafter, the term "machine" refers to a machine of the type for use in the tanning industry as long as it is equipped with at least one conveyor belt for transporting and feeding the hides along a longitudinal direction L.

In one embodiment, the machine 2 as described and illustrated in the figures is a staking machine for softening and stretching industrial hides and similar products as is well known and is not part of the present invention.

The machine 2 is known to comprise a frame 3 with an inlet area 4 for the products to be treated and an outlet area 5 for the treated products.

The frame 3 has an upper conveyor belt 6 and a lower conveyor belt 7 installed thereon, which are made of a flexible closed-loop material and are supported by at least one pair of end rollers 8, 9 and 10, 11, respectively.

In detail, the upper belt 6 is wound on an inlet end roller 8 proximate to the inlet area 4 and an outlet end roller 9 proximate to the outlet area 5, whereas the lower belt 7 is wound on an inlet end roller 10 proximate to the inlet area 4 and an outlet end roller 11 proximate to the outlet area 5.

For completeness, the lower belt 7 has additional return rollers, referenced 12, 13 and 14 respectively, which are used to keep the belt in an ideal tension state, i.e. perfectly tensioned.

The two belts 6, 7 follow such a path as to define respective substantially horizontal portions 15, 16, which face and substantially contact each other, and are adapted to hold the products therebetween and feed them along a longitudinal direction L from the inlet area 4 toward the outlet area 5.

Still for completeness, at the aforementioned mutually facing horizontal portions 15, 16 the machine comprises pairs of mutually facing beating masses, i.e. stationary upper masses 17 and moving lower masses 18 respectively, the latter being reciprocated, which are equipped with complementarily shaped tools, not shown, for stretching and softening the hides as they are fed between the belts 6, 7 along the longitudinal direction L.

According to the invention, the tool 1 comprises at least one first extending device 20 for changing the upper belt 6 and at least one second extending device 20' for changing the lower belt 7.

Since the two extending devices 20, 20' are very similar and comprise the same essential features, only one of them will be described in detail below, namely the first device 20, and only the features of the second device 20' differing from the first device will be highlighted.

The first extending device 20 comprises a first head 21 having a carriage 22 slidably mounted on longitudinal guide means 23 adapted to be removably secured to the frame 3 of the machine 2.

In particular, the guide means 23 comprise a profile that can be fixed to the side of the frame 3 and has a cross-section adapted to define a pair of substantially parallel longitudinal rails 24, 25 on which the carriage 22 slides.

The head 21 may be associated with at least one grip member 26, essentially in the form of a tube or a sleeve, which is adapted to engage and be wrapped by a first portion 27 of the belt 6 adjacent to an inlet end roller 8, whereas the second portion of the belt 6, opposite to the first portion 27, is wound on the outlet end roller 9 of the machine 2.

In particular, the head 21 comprises a support 28 secured to the carriage 22 with at least two tubular seats for slidingly receiving one or more grip members 26 from the outside.

In the illustrated embodiment, the head 21 substantially has an open V shape with a vertical portion and an inclined portion.

Conveniently, the device 20 comprises semi-automatic drive means 29 for moving the head 21 along the longitudinal guide means 23 to thereby stretch the belt 6 and allow the first portion 27 of the belt 6 to transversely slide on the adjacent end roller 8, or be removed therefrom with little physical effort.

The drive means 29 may be of any type, i.e. mechanical, pneumatic, hydraulic, magnetic or electrical means.

In one illustrated embodiment, the semi-automatic drive means 29 comprise at least one threaded bar 30 adapted to be engaged in at least one nut 31 rigidly joined to the carriage 22 and locked in its rotation relative thereto.

The threaded bar 30 may have an end joint adapted to be coupled to actuation means, not shown, which are designed to be actuated by an operator when needed, to cause the head 21 to travel along the pair of longitudinal rails 24, 25.

Conveniently, the electric motor may be stationary and fixed to the profile of the guide means 23 or may consist of a simple industrial screwdriver held by an operator.

The drive mechanism with the threaded bar 30 and the nut 31 is configured so that the travel of the carriage 22, and therefore the head 21, extends between a retracted position in which the grip member 26 can be inserted into the first portion 27 of the belt 6 and act as an end roller, and an forward position in which the head 21 stretches the belt 6 to a sufficient extent as to allow the first portion 27 of the belt 6 to transversely slide on the adjacent end roller 8.

With this arrangement, the first extending device 20 can afford simple and safe replacement and installation, i.e. changing the upper conveyor belt 6, while avoiding the use of complex and expensive machinery and improving the safety conditions for the operators.

The second extending device 20', which is configured to change the lower belt 7, is substantially identical to the first one 20, all the matching parts being designated by the same references provided with a prime mark.

The only difference is given by the shape of the support 28', which in this case is a straight bar, that is or can be inclined with respect to the vertical to conform with the arrangement of the return rollers 12, 13, 14.

The support 28' also has respective seats for the grip members 26' at its ends.

In a further aspect, the invention relates to a method of installing and replacing conveyor belts 6, 7 of a staking machine 2.

The method of the invention includes the following steps:
a) providing a first extending device 20 and coupling it to one side of the frame 3 of the machine 2 for replacing an upper belt 6;
b) placing the head 21 of the first device 20 in a retracted position by rotating the threaded bar 30 in a predetermined direction;
c) inserting at least one grip member 26 into a first portion 27 of the upper belt 6;
d) rotating the threaded bar 30 in the opposite direction and longitudinally moving said head 21 from a retracted position to a forward position substantially in line with the inlet end roller 8 thereby stretching the upper conveyor belt 6;
e) sliding the upper belt 6 along the transverse sleeve 26 and transferring it onto the inlet end roller 8;
f) removing the support 28 of the first extending device 20, mounting a second extending device 20' to the frame 3 of the machine 2 to replace a lower belt 7;
g) repeating the steps from b) to e);
h) removing the first 20 and second 20' devices from the machine 2.

In one embodiment, the longitudinal guide means 23 of the first extending device 20 and the guide means 23' of the second extending device 20' coincide with each other.

Thus, in order to change the lower belt 7, the step f) of removing may comprise the vertical displacement of the guide means 23 of the first extending device 20 and the installation of the support 28' of the second extending device 20' thereon.

The steps of the above discussed method can considerably reduce the time required to install the conveyor belts of a staking machine in case of replacement, thereby increasing the safety of the operators during replacement.

The above disclosure clearly shows that the tool and the method of the invention fulfill the intended objects and namely afford effective and immediate replacement of the belt thereby reducing machine downtime with utmost safety for the operators.

The tool and method of the invention are susceptible to a number of changes or variants, within the inventive concept disclosed in the appended claims.

While the tool and method have been described with particular reference to the accompanying figures, the numerals referred to in the disclosure and claims are only used for the sake of a better intelligibility of the invention and shall not be intended to limit the claimed scope in any manner.

Reference herein to "one embodiment" or "the embodiment" or "some embodiments" indicates that a particular characteristic, structure or element that is being described is included in at least one embodiment of the inventive subject matter.

### Industrial Applicability

The present invention may find application in industry, because it can be produced on an industrial scale in tanning machine factories.

## Claims

1. A belt-changing tool (1) for semi-automatic replacement of conveyor belts (6, 7) of a machine (2) for processing flexible sheet products, such as industrial hides, wherein the machine (2) comprises a frame (3) defining an inlet area (4) and an outlet area (5) for the products, said frame (3) having at least one pair of conveyor belts (6, 7) installed thereon, said tool comprising at least one first extending device (20) having a head (21) slidingly mounted on longitudinal guide means (23), at least one transverse grip member (26) adapted to engage a first portion (27) of a belt (6) whose second portion, opposite to the first portion (27), is wound on an end roller (9) of the belt, drive means (29) acting on said head (21) to longitudinally move it along said guide means (23);
**characterized in that** the tool is separate and independent from the machine (2) and is configured to be removably coupled and uncoupled to/from the frame (3) of the machine (2).

2. Tool as claimed in claim 1, **characterized in that** said guide means (23) comprise at least one profile whose cross-section is adapted to define a pair of longitudinal rails (24, 25) which can be removably secured to one side of the machine (2); said head (21) having a carriage (22) that can move along said pair of longitudinal rails (24, 25).

3. Tool as claimed in claim 2, **characterized in that** said drive means (29) are semi-automatic and comprise at least one threaded bar (30) adapted to be engaged in at least one first nut (31) rigidly joined to said carriage (22).

4. Tool as claimed in claim 3, **characterized in that** said threaded bar (30) is designed to be coupled to actuation means that can be controlled to cause said head (21) to travel along said pair of longitudinal rails (24, 25).

5. Tool as claimed in claim 4, **characterized in that** the travel of said head (21) extends between a retracted position in which said at least one transverse grip member (26) is suitable to be inserted into said first portion (27) of the belt (6) and acts as an end roller and a forward position in which said head (21) is configured to stretch the belt (6) to a sufficient extent as to allow the first portion (27) of the belt (6) to transversely slide onto the adjacent end roller (8).

6. Tool as claimed in claim 1, **characterized in that** said first head (21) comprises a support (28) secured to said carriage (22) and having seats for removably receiving a plurality of said transverse grip members (26).

7. Tool as claimed in claim 6, **characterized in that** said support (28) has at least two tubular seats for said grip members (26) in the form of a tube or sleeve.

8. Tool as claimed in one or more of the preceding claims, **characterized in that** said first extending device (20) is suitable to interact with at least one upper belt (6) of the machine (2) to engage and stretch it.

9. Tool as claimed in claim 1, **characterized in that** it comprises a second extending device (20') that is suitable to interact with at least one lower belt (7) of the machine (2) to engage and stretch it.

10. Tool as claimed in claim 9, **characterized in that** said second extending device (20') differs from said first extending device (20) only **in that** said support (28') is substantially straight and inclined with respect to said guide means (23') and has tubular seats at its ends, for respective grip members (26').

11. A method of replacing conveyor belts (6, 7) of a staking machine (2) for softening and stretching industrial hides, using a semi-automatic tool (1) as claimed in one or more of the preceding claims, said method comprising the step of a) providing a first extending device (20) and removably coupling it to one side of the frame (3) of the machine (2) to replace an upper belt (6);
**characterized in that** it comprises the steps of:
b) placing the head (21) of said first device (20) in a retracted position by rotating the threaded bar (30) in a predetermined direction;
c) inserting at least one grip member (26) into a first portion (27) of the upper belt (6);
d) rotating the threaded bar (30) in the opposite direction and longitudinally moving said head (21) from said retracted position to a forward position substantially in line with an end roller (8) thereby stretching the upper conveyor belt (6);
e) sliding the upper belt (6) along said grip member (26) and transferring it onto said end roller (8);
f) removing the support (28) of said first extending device (20) and mounting a second extending device (20') to the frame (3) of the machine (2) to replace a lower belt (7);
g) repeating the steps from b) to e);
h) removing said first (20) and second devices (20') from the machine (2).

12. Method as claimed in claim 11, **characterized in that** the longitudinal guide means (23) of said first extending device (20) and the guide means (23') of said second extending device (20') are coincident, said step f) of removing comprising vertically displacing the guide means (23) of said first extending device (20) and mounting the support (28') of said second extending device (20') thereon.

## Patentansprüche

1. Bandwechselwerkzeug (1) zum halbautomatischen Wechseln von Förderbändern (6, 7) einer Maschine (2) zur Verarbeitung von flexiblen Blattprodukten, beispielsweise Industriehäuten, wobei die Maschine (2) einen Rahmen (3) umfasst, der einen Einlassbereich (4) und einen Auslassbereich (5) für die Produkte definiert, wobei auf dem Rahmen (3) mindestens ein Paar Förderbänder (6, 7) installiert ist und das Werkzeug mindestens eine erste Erweiterungsvorrichtung (20) mit einem Kopf (21) umfasst, der verschiebbar auf Längsführungsmitteln (23) montiert ist, und mindestens einem Quergriffelement (26) umfasst, das dazu geeignet ist, einen ersten Abschnitt (27) eines Riemens (6) zu erfassen, dessen zweiter Abschnitt dem ersten Abschnitt (27) gegenüberliegt und auf eine Endrolle (9) des Bandes gewickelt ist, wobei Antriebsmittel (29) auf den Kopf (21) einwirken, um ihn in Längsrichtung entlang der Führungsmittel (23) zu bewegen;
**dadurch gekennzeichnet, dass** das Werkzeug separat und unabhängig von der Maschine (2) ist und so konfiguriert ist, dass es abnehmbar an den Rahmen (3) der Maschine (2) gekoppelt und von diesem abgekoppelt werden kann.

2. Werkzeug nach Anspruch 1, **dadurch gekennzeichnet, dass** die Führungsmittel (23) mindestens ein Profil umfassen, dessen Querschnitt angepasst ist, um ein Paar Längsschienen (24, 25) zu definieren, die abnehmbar an einer Seite der Maschine (2) befestigt werden können; wobei der Kopf (21) einen Schlitten (22) aufweist, der sich entlang des Paares von Längsschienen (24, 25) bewegen kann.

3. Werkzeug nach Anspruch 2, **dadurch gekennzeichnet, dass** die Antriebsmittel (29) halbautomatisch sind und mindestens eine Gewindestange (30) umfassen, die in mindestens eine erste Mutter (31) eingreifen kann, die fest mit dem Schlitten (22) verbunden ist.

4. Werkzeug nach Anspruch 3, **dadurch gekennzeichnet, dass** die Gewindestange (30) so gestaltet ist, dass sie mit Betätigungsmitteln gekoppelt werden kann, die gesteuert werden können, um zu bewirken, dass sich der Kopf (21) entlang des Paares von Längsschienen (24, 25) bewegt.

5. Werkzeug nach Anspruch 4, **dadurch gekennzeichnet, dass** sich die Bewegung des Kopfes (21) zwischen einer zurückgezogenen Position erstreckt, in der das mindestens eine Quergriffelement (26) zum Einführen in den ersten Abschnitt (27) des Riemens geeignet ist (6) und fungiert als Endrolle, und einer vorderen Position, in der der Kopf (21) so konfiguriert ist, dass er den Riemen (6) so weit dehnt, dass sich der erste Abschnitt (27) des Riemens (6) quer auf die benachbarte Endrolle (8) gleitend geschoben werden kann.

6. Werkzeug nach Anspruch 2, **dadurch gekennzeichnet, dass** der erste Kopf (21) einen Träger (28) umfasst, der an dem Schlitten (22) befestigt ist und Sitze zur abnehmbaren Aufnahme mehrerer Quergriffelemente (26) aufweist.

7. Werkzeug nach Anspruch 6, **dadurch gekennzeichnet, dass** der Träger (28) mindestens zwei rohrförmige Sitze für die Griffelemente (26) in Form eines Rohrs oder einer Hülse aufweist.

8. Werkzeug nach einem oder mehreren der vorhergehenden Ansprüche, **dadurch gekennzeichnet, dass** die erste Erweiterungsvorrichtung (20) dazu geeignet ist, mit mindestens einem Oberband (6) der Maschine (2) zusammenzuwirken, um dieses anzugreifen und zu dehnen.

9. Werkzeug nach Anspruch 1, **dadurch gekennzeichnet, dass** es eine zweite Erweiterungsvorrichtung (20') umfasst, die geeignet ist, mit mindestens einem unteren Riemen (7) der Maschine (2) zusammenzuwirken, um diesen anzugreifen und zu dehnen.

10. Werkzeug nach Anspruch 9, **dadurch gekennzeichnet, dass** sich die zweite Erweiterungsvorrichtung (20') von der ersten Erweiterungsvorrichtung (20) nur dadurch unterscheidet, dass eine Stütze (28') im Wesentlichen gerade und in Bezug auf seine Führungsmittel geneigt ist (23') und an seinen Enden rohrförmige Sitze für jeweilige Griffelemente (26') aufweist.

11. Ein Verfahren zum Ersetzen von Förderbändern (6, 7) einer Absteckmaschine (2) zum Weichmachen und Strecken von Industriehäuten unter Verwendung eines halbautomatischen Werkzeugs (1) nach einem oder mehreren der vorhergehenden Ansprüche, wobei das Verfahren den folgenden Schritt umfasst: a) Bereitstellen einer ersten Erweiterungsvorrichtung (20) und lösbares Koppeln derselben an einer Seite des Rahmens (3) der Maschine (2), um ein Oberband (6) zu ersetzen;
**dadurch gekennzeichnet, dass** es die folgenden Schritte umfasst:
b) Bringen des Kopfes (21) der ersten Vorrichtung (20) in eine zurückgezogene Position durch Drehen der Gewindestange (30) in eine vorbestimmte Richtung;
c) Einsetzen mindestens eines Griffelements (26) in einen ersten Abschnitt (27) des oberen Bands (6);
d) Drehen der Gewindestange (30) in die entgegengesetzte Richtung und Längsbewegen des Kopfes (21) von der zurückgezogenen Position in eine vordere Position im Wesentlichen in einer Linie mit einer Endrolle (8), wodurch das obere Förderband (6) gedehnt wird;
e) Schieben des oberen Bands (6) entlang des Greifelements (26) und Übertragen desselben auf die Endrolle (8);
f) Entfernen der Halterung (28) der ersten Erweiterungsvorrichtung (20) und Anbringen einer zweiten Erweiterungsvorrichtung (20') am Rahmen (3) der Maschine (2), um ein unteren Band (7) zu ersetzen;
g) Wiederholen der Schritte von b) bis e);
h) Entfernen der ersten (20) und zweiten Vorrichtung (20') aus der Maschine (2).

12. Verfahren nach Anspruch 11, **dadurch gekennzeichnet, dass** die Längsführungsmittel (23) der ersten Erweiterungsvorrichtung (20) und die Führungsmittel (23') der zweiten Erweiterungsvorrichtung (20') zusammenfallen, wobei der Schritt f) des Entfernens das vertikale Verschieben der Führungsmittel (23) der ersten Erweiterungsvorrichtung (20) und das Anbringen der Stütze (28') der zweiten Erweiterungsvorrichtung (20') daran umfasst.

## Revendications

1. Outil de changement de courroie (1) pour le remplacement semi-automatique des courroies transporteuses (6, 7) d'une machine (2) pour traiter des produits en feuilles flexibles, tels que des peaux industrielles, dans lequel la machine (2) comprend un châssis (3) définissant une zone d'entrée (4) et une zone de sortie (5) pour les produits, sur ledit châssis (3) étant installée au moins une paire de bandes transporteuses (6, 7), ledit outil comprenant au moins un premier dispositif d'extension (20) comportant une tête (21) montée coulissante sur des moyens de guidage longitudinaux (23), au moins un élément de préhension transversal (26) adapté pour engager une première partie (27) d'une bande (6) dont la deuxième partie, opposée à la première partie (27), est enroulé sur un rouleau d'extrémité (9) de la bande, des moyens d'entraînement (29) agissant sur ladite tête (21) pour la déplacer longitudinalement le long desdits moyens de guidage (23);
**caractérisé en ce que** l'outil est séparé et indépendant de la machine (2) et est configuré pour être couplé et désaccouplé de manière amovible au/du châssis (3) de la machine (2).

2. Outil selon la revendication 1, **caractérisé en ce que** lesdits moyens de guidage (23) comprennent au moins un profil dont la section transversale est adaptée pour définir une paire de rails longitudinaux (24, 25) qui peuvent être fixés de manière amovible sur un côté de la machine (2); ladite tête (21) ayant un chariot (22) qui peut se déplacer le long de ladite paire de rails longitudinaux (24, 25).

3. Outil selon la revendication 2, **caractérisé en ce que** lesdits moyens d'entraînement (29) sont semi-automatiques et comprennent au moins une barre filetée (30) adaptée pour être engagée dans au moins un premier écrou (31) solidaire dudit chariot. (22).

4. Outil selon la revendication 3, **caractérisé en ce que** ladite barre filetée (30) est conçue pour être couplée à des moyens d'actionnement qui peuvent être contrôlés pour causer le déplacement de ladite tête (21) le long de ladite paire de rails longitudinaux (24, 25).

5. Outil selon la revendication 4, **caractérisé en ce que** la course de ladite tête (21) s'étend entre une position rétractée dans laquelle ledit au moins un élément de préhension transversal (26) est apte pour être inséré dans ladite première partie (27) de la bande (6) et agit comme un rouleau d'extrémité, et une position avant dans laquelle ladite tête (21) est configurée pour étirer la courroie (6) dans une mesure suffisante pour permettre à la première partie (27) de la courroie (6) de glisser transversalement sur le rouleau d'extrémité adjacent (8).

6. Outil selon la revendication 2, **caractérisé en ce que** ladite première tête (21) comprend un support (28) fixé audit chariot (22) et comportant des sièges pour recevoir de manière amovible une pluralité desdits éléments de préhension transversaux (26).

7. Outil selon la revendication 6, **caractérisé en ce que** ledit support (28) possède au moins deux sièges tubulaires pour lesdits éléments de préhension (26) sous la forme d'un tube ou d'un manchon.

8. Outil selon une ou plusieurs des revendications précédentes, **caractérisé en ce que** ledit premier dispositif d'extension (20) est adapté pour interagir avec au moins une bande supérieure (6) de la machine (2) pour l'engager et l'étirer.

9. Outil selon la revendication 1, **caractérisé en ce qu'**il comprend un deuxième dispositif d'extension (20') qui est adapté pour interagir avec au moins une bande inférieure (7) de la machine (2) pour l'engager et l'étirer.

10. Outil selon la revendication 9, **caractérisé en ce que** ledit deuxième dispositif d'extension (20') diffère dudit premier dispositif d'extension (20) uniquement **en ce que** en support (28') est sensiblement droit et incliné par rapport au ses moyens de guidage (23') et comporte des sièges tubulaires à ses extrémités, pour les éléments de préhension respectifs (26').

11. Procédé de remplacement des bandes transporteuses (6, 7) d'une machine à piquer (2) pour adoucir et étirer les peaux industrielles, en utilisant un outil semi-automatique (1) comme revendiqué dans une ou plusieurs des revendications précédentes, ledit procédé comprenant l'étape consistant à: a) fournir un premier dispositif d'extension (20) et le coupler de manière amovible à un côté du châssis (3) de la machine (2) pour remplacer une courroie supérieure (6);
**caractérisé en ce qu'**il comprend les étapes de:
b) placer la tête (21) dudit premier dispositif (20) dans une position rétractée en faisant tourner la barre filetée (30) dans une direction prédéterminée;
c) insérer au moins un élément de préhension (26) dans une première partie (27) de la bande supérieure (6);
d) faire tourner la barre filetée (30) dans la direction opposée et déplacer longitudinalement ladite tête (21) depuis ladite position rétractée vers une position avant sensiblement en ligne avec un rouleau d'extrémité (8), étirant ainsi la bande transporteuse supérieure (6);
e) faire glisser la bande supérieure (6) le long dudit élément de préhension (26) et la transférer sur ledit rouleau d'extrémité (8);
f) retirer le support (28) dudit premier dispositif d'extension (20) et monter un deuxième dispositif d'extension (20') sur le châssis (3) de la machine (2) pour remplacer une courroie inférieure (7);
g) répéter les étapes de b) à e);
h) retirer lesdits premier (20) et deuxième dispositifs (20') de la machine (2).

12. Procédé selon la revendication 11, **caractérisé en ce que** le mouvement longitudinal les moyens de guidage (23) dudit premier dispositif d'extension (20) et les moyens de guidage (23') dudit deuxième dispositif d'extension (20') coïncident, ladite étape f) de retrait comprenant le déplacement vertical des moyens de guidage (23) dudit premier dispositif d'extension (20) et le montage du support (28') dudit deuxième dispositif d'extension (20') sur celui-ci.
